# EUROPEAN PATENT APPLICATION

(11) **EP 4 668 707 A1**
(43) Date of publication of application: **24.12.2025**
(21) Application number: 24756298.6
(22) Date of filing: 08.02.2024
(51) Int. Cl.: H04L 51/10

(54) **INTERACTION METHOD AND APPARATUS BASED ON VIRTUAL OBJECT, AND DEVICE, STORAGE MEDIUM AND PRODUCT**

(30) Priority: 17.02.2023 CN 202310184015
(71) Applicant: Beijing Zitiao Network Technology Co., Ltd., Beijing 100190 (CN)
(72) Inventor: XUAN, Yueyang, Beijing 100028 (CN); HUANG, Zhe, Beijing 100028 (CN); ZHOU, Jie, Beijing 100028 (CN); PAN, Junjie, Beijing 100028 (CN); LIU, Jianxiang, Beijing 100028 (CN); ZHOU, Yang, Beijing 100028 (CN); HE, Yanglu, Beijing 100028 (CN)
(74) Representative: Isarpatent
(86) International application number: PCT/CN2024/076937
(87) International publication number: WO 2024/169926

(57) **Abstract**

Provided in the embodiments of the present disclosure are an interaction method and apparatus based on a virtual object, and a device, a storage medium and a product. The method comprises: in a session interface between a first user and a second user, displaying associated content of a second virtual object that is sent by the second user, wherein the second user is a user who has a preset association relationship with the first user, and the second virtual object is a virtual object that is pre-generated by the second user; in response to a preset operation, which is triggered by the first user on the basis of the associated content, determining interaction content corresponding to the preset operation; performing an interaction operation with the second virtual object on the basis of the interaction content, so as to obtain an interaction result; and displaying the interaction result in the session interface, which is between the first user and the second user.

## Description

The present application claims priority to Chinese Patent Application No. 202310184015.7, filed on February 17, 2023, which is incorporated herein by reference in its entirety as a part of the present application.

### TECHNICAL FIELD

Embodiments of the present disclosure relate to an interaction method and apparatus based on a virtual object, a device, a storage medium, and a product.

### BACKGROUND

Currently, many applications provide a virtual object generation function. A user can generate a personalized virtual object based on the generation function. When chatting in a chat interface, the user can send an emoji associated with the virtual object to enrich chat content. However, some interaction manners based on a virtual object are relatively simplistic, resulting in a poor display effect.

### SUMMARY

Embodiments of the present disclosure provide an interaction method and apparatus based on a virtual object, a device, a storage medium, and a product to resolve the technical problem that interaction manners based on a virtual object are relatively simplistic.

An embodiment of the present disclosure provides an interaction method based on a virtual object, applied to a client of a first user. The method includes:
displaying, in a chat interface between the first user and a second user, an associated content of a second virtual object which is sent by the second user, where the second user is a user having a preset association relationship with the first user, and the second virtual object is a virtual object pre-generated by the second user;
determining, in response to a preset operation triggered by the first user based on the associated content, an interactive content corresponding to the preset operation;
performing an interaction operation with the second virtual object based on the interactive content to obtain an interaction result; and
displaying the interaction result in the chat interface between the first user and the second user.

An embodiment of the present disclosure provides an interaction method based on a virtual object, applied to a client of a second user. The method includes:
determining a second virtual object associated with the second user, where the second virtual object is a virtual object pre-generated by the second user;
generating an associated content of the second virtual object in response to a preset operation triggered on the second virtual object by the second user; and
sending the associated content to a chat interface between the second user and a first user, so that the first user performs a preset operation based on the associated content to determine interactive content, performs an interaction operation with the second virtual object based on the interactive content to generate an interaction result, and displays the interaction result in the chat interface, where the first user is a user having a preset association relationship with the second user.

An embodiment of the present disclosure provides an interaction apparatus based on a virtual object, applied to a client of a first user. The apparatus includes:
a display module configured to display, in a chat interface between the first user and a second user, an associated content of a second virtual object which is sent by the second user, where the second user is a user having a preset association relationship with the first user, and the second virtual object is a virtual object pre-generated by the second user;
a processing module configured to determine, in response to a preset operation triggered by the first user based on the associated content, an interactive content corresponding to the preset operation;
an interaction module configured to perform an interaction operation with the second virtual object based on the interactive content to obtain an interaction result; and
a display module configured to display the interaction result in the chat interface between the first user and the second user.

An embodiment of the present disclosure provides an interaction apparatus based on a virtual object, applied to a client of a second user. The apparatus includes:
a determining module configured to determine a second virtual object associated with the second user, where the second virtual object is a virtual object pre-generated by the second user;
a generation module configured to generate associated content of the second virtual object in response to a preset operation triggered on the second virtual object by the second user; and
a sending module configured to send the associated content to a chat interface between the second user and a first user, so that the first user performs a preset operation based on the associated content to determine an interactive content, performs an interaction operation with the second virtual object based on the interactive content to generate an interaction result, and displays the interaction result in the chat interface, where the first user is a user having a preset association relationship with the second user.

An embodiment of the present disclosure provides an electronic device. The electronic device includes: a processor and a memory, where
the memory stores computer-executable instructions; and
the processor executes the computer-executable instructions stored in the memory, to cause the at least one processor to perform the interaction method based on a virtual object according to the above embodiments and various possible designs of the above embodiments.

An embodiment of the present disclosure provides a computer-readable storage medium storing computer-executable instructions thereon, when executed by a processor, implements the interaction method based on a virtual object according to the above embodiments and various possible designs of the above embodiments.

An embodiment of the present disclosure provides a computer program product including a computer program, when executed by a processor, implements the method based on a virtual object according to the above embodiments and various possible designs of the above embodiments.

### BRIEF DESCRIPTION OF DRAWINGS

In order to describe the technical solutions in embodiments of the present disclosure or in the prior art more clearly, the accompanying drawings for describing the embodiments or the prior art will be briefly described below. Apparently, the accompanying drawings in the description below show some embodiments of the present disclosure, and those of ordinary skill in the art may still derive other accompanying drawings from these accompanying drawings without creative efforts.
Fig. 1 is a flowchart of an interaction method based on a virtual object according to an embodiment of the present disclosure;
Fig. 2 is a schematic diagram of interface interaction according to an embodiment of the present disclosure;
Fig. 3 is another schematic diagram of interface interaction according to an embodiment of the present disclosure;
Fig. 4 is another schematic diagram of interface interaction according to an embodiment of the present disclosure;
Fig. 5 is a schematic diagram of a display interface according to an embodiment of the present disclosure;
Fig. 6 is another schematic diagram of interface interaction according to an embodiment of the present disclosure;
Fig. 7 is a schematic flowchart of an interaction method based on a virtual object according to an embodiment of the present disclosure;
Fig. 8 is a schematic diagram of a structure of an interaction apparatus based on a virtual object according to an embodiment of the present disclosure;
Fig. 9 is a schematic diagram of a structure of an interaction apparatus based on a virtual object according to an embodiment of the present disclosure; and
Fig. 10 is a schematic diagram of a structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all the embodiments of the present disclosure. All other embodiments obtained by those of ordinary skill in the art based on the embodiments of the present disclosure without any creative effort shall fall within the scope of protection of the present disclosure.

To resolve the technical problem that interaction manners based on a virtual object are relatively simplistic, the present disclosure provides an interaction method and apparatus based on a virtual object, a device, a storage medium, and a product.

It should be noted that the interaction method and apparatus based on a virtual object, the device, the storage medium, and the product provided in the present disclosure can be applied to any interaction scenario based on a virtual object.

Currently, after a virtual object is generated by a user, the user generally can only dress up the virtual object or send an emoji associated with the virtual object in an instant messaging function to implement an interaction operation based on a virtual object. However, the interaction manners are often relatively simplistic, so that the user cannot perform more diversified interaction operations based on the virtual object, resulting in a poor display effect.

To enrich interaction manners based on a virtual object, an associated content of a second virtual object which is sent by a second user may be displayed in a chat interface. In response to a preset operation triggered on the associated content by a first user, an interaction operation may be performed with the second virtual object based on interactive content corresponding to the preset operation, and an interaction result may be displayed in the chat interface. The interaction operation includes mixing expression content corresponding to the second virtual object with expression content selected by the user. Alternatively, the interaction operation includes duetting the second virtual object with a first virtual object of the first user, and during duetting, the first virtual object and the second virtual object can perform an action selected by the first user, or the like.

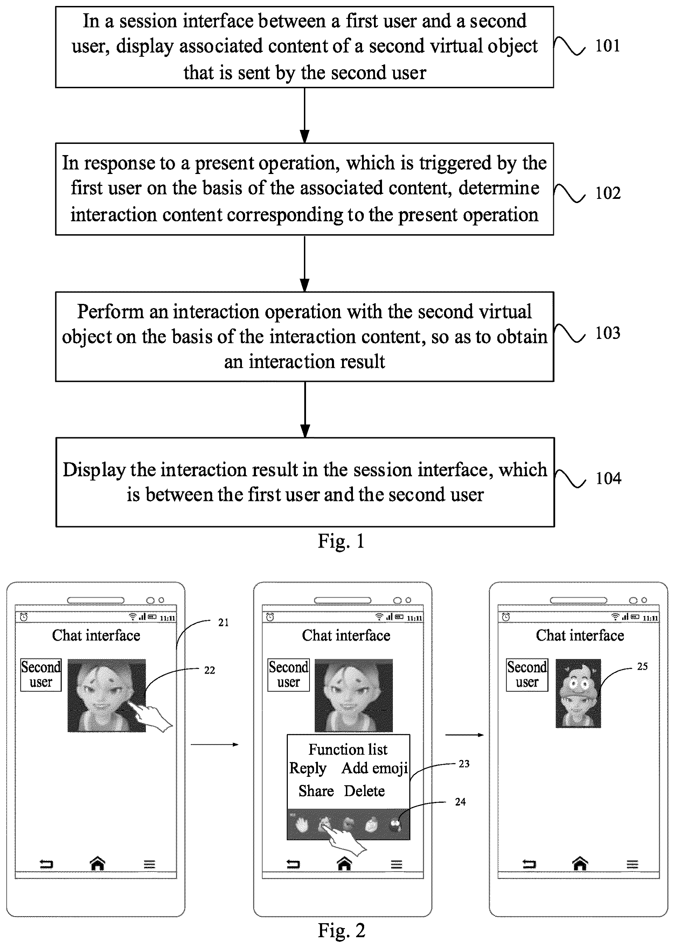

Fig. 1 is a flowchart of an interaction method based on a virtual object, applied to a client of a first user, according to an embodiment of the present disclosure. As shown in Fig. 1, the method includes the following steps.

Step 101: displaying, in a chat interface between the first user and a second user, an associated content of a second virtual object which is sent by the second user, wherein the second user is a user having a preset association relationship with the first user, and the second virtual object is a virtual object pre-generated by the second user.

A subject of execution of this embodiment is an interaction apparatus based on a virtual object. The interaction apparatus based on a virtual object may be coupled to a terminal device of the first user, so that an interaction operation based on a virtual object can be performed based on a trigger operation of the first user. Optionally, the interaction apparatus based on a virtual object may also be coupled to a server communicatively connected to the terminal device of the first user. As such, based on the trigger operation of the first user on the terminal device, the terminal device can be controlled to perform an interaction operation based on a virtual object.

In this implementation, the first user may pre-generate a first virtual object, and the second user may pre-generate a second virtual object. For example, the second virtual object may be a three-dimensional virtual object generated by the second user according to actual needs. The second user is a user having a preset association relationship with the first user. For example, the second user may be a friend of the first user, or the second user may be a user that the first user follows, or the like.

When the first user interacts with the second user in a chat interface, the second user may generate an associated content based on the second virtual object, and send the associated content of the second virtual object to the first user. Accordingly, in the chat interface of the first user, the associated content of the second virtual object which is sent by the second user may be displayed. The associated content includes, but is not limited to, an expression content corresponding to the second virtual object, a group photo content generated by the second virtual object and another virtual object, a picture content corresponding to the first virtual object, or the like.

Step 102: determining, in response to a preset operation triggered by the first user based on the associated content, an interactive content corresponding to the preset operation.

In this implementation, after the associated content is displayed in the chat interface, the first user may trigger a preset operation on the associated content according to actual needs. The preset operation includes, but is not limited to, a touch-and-hold operation, a double-tap operation, or a trigger operation on a control corresponding to the associated content, or the like.

Optionally, in response to a preset operation triggered by the first user based on the associated content, an interactive content corresponding to the preset operation may be determined. Due to the associated content sent by the second user may include different categories, interaction operations based on associated contents corresponding to different categories are also different. For different associated contents, an interactive content corresponding to the associated content may be determined to implement different interaction operations.

Step 103: performing an interaction operation with the second virtual object based on the interactive content, to obtain an interaction result.

In this implementation, after the interactive content corresponding to the preset operation is determined, an interaction operation may be performed with the second virtual object based on the interactive content to obtain the interaction result.

For example, the associated content of the second virtual object may be an expression content corresponding to the second virtual object. The first user may perform an expression mixing operation based on the expression content. Therefore, an interactive content determined based on a preset operation may include a content to be mixed for mixing. The content to be mixed includes, but is not limited to, one or more of a group consisting of an emoji, an image content, and a text content. After the content to be mixed is determined, a mixing operation may be performed on the content to be mixed and the associated content to obtain an interaction result.

Step 104: displaying the interaction result in the chat interface between the first user and the second user.

In this embodiment, to enrich display contents in the chat interface and enable the first user to view the interaction result more intuitively, the interaction result may be displayed in an interaction interface after the interaction result is generated.

Optionally, when an interaction operation based on the second virtual object is an expression mixing operation, a mixed interaction result may be updated and displayed at a display position for the associated content in the chat interface. When an interaction operation based on the second virtual object is a content group photoing operation, an interaction result generated by the first user based on the associated content may be displayed in the chat interface.

According to the interaction method based on a virtual object provided in this embodiment, an associated content of the second virtual object which is sent by the second user is displayed in a chat interface, so that interactive content is determined in response to a preset operation triggered by the first user for the associated content of the second virtual object, and an interaction operation is performed with the second virtual object based on the interactive content, thereby implementing an interaction operation based on a virtual object. In addition, display contents in the chat interface and interaction manners can be enriched, thereby improving the display effect.

Optionally, on the basis of any one of the above embodiments, step 101 includes:
displaying, in the chat interface, any expression content associated with the second virtual object which is sent by the second user.

In this embodiment, the second virtual object may correspond to a plurality of pieces of expression content. Different expression content may have different facial expressions, or different expression content may have different body movements, and the like.

Accordingly, the interaction operation based on the second virtual object may be an expression mixing operation. The associated content of the second virtual object may be any expression content associated with the second virtual object. Therefore, any expression content associated with the second virtual object which is sent by the second user may be displayed in the chat interface.

Further, on the basis of any one of the above embodiments, step 102 includes:
displaying, in a preset display area, a function list corresponding to the associated content in response to a preset trigger operation of the first user on the associated content, wherein the function list includes at least one content to be mixed; and
determining, in response to a trigger operation of the first user on any of the at least one content to be mixed, a target content to be mixed that is selected by the first user as the interactive content.

In this embodiment, after the expression content associated with the second virtual object is displayed in the chat interface, the first user may implement expression mixing by performing a preset trigger operation on the expression content.

Optionally, a function list corresponding to the associated content is displayed in a preset display area in response to a preset trigger operation of the first user on the associated content, where the function list includes at least one content to be mixed. Optionally, the content to be mixed includes one or more of an emoji, image content, or text content. The preset trigger operation includes, but is not limited to, a tap operation, a double-tap operation, a touch-and-hold operation, and another trigger operation on the expression content. Target content to be mixed selected by the first user is determined as the interactive content in response to a trigger operation of the first user on any content to be mixed.

Further, on the basis of any one of the above embodiments, the performing an interaction operation with the second virtual object based on the interactive content to obtain an interaction result includes:
performing a mixing operation on the interactive content and the associated content of the second virtual object to obtain the interaction result.

In this embodiment, after interactive content currently selected by the first user is determined, a mixing operation may be performed on the interactive content and the associated content of the second virtual object to obtain the interaction result.

Optionally, categories of interactive content include, but are not limited to, one or more of an emoji, an image content, or a text content. There may be different mixing manners for different interactive content. For example, if the interactive content is an emoji, the color, shape and display content of the emoji may be adjusted based on the emoji during a mixing operation. If the interactive content is a text content, the text content may be added at a position associated with the expression content. If the interactive content is an image content, the expression content may be displayed at a specified position of the image content. Manners for mixing different types of interactive content are not limited in the present disclosure.

According to the interaction method based on a virtual object provided in this embodiment, any expression content associated with the second virtual object which is sent by the second user is displayed in the chat interface. As such, a function list including at least one content to be mixed is displayed in a preset display area in response to a preset trigger operation of the first user on the associated content. A target content to be mixed selected by the first user is determined as the interactive content in response to a trigger operation of the first user on any content to be mixed. A mixing operation is performed on the interactive content and the associated content of the second virtual object to obtain the interaction result. As such, a mixing operation can be performed on the second virtual object and the target content to be mixed which is sent by the second user, which enriches interaction manners based on a virtual object, and enriches display contents in the chat interface.

Further, on the basis of any one of the above embodiments, the function list further includes a preset display control.

After displaying, in the preset display area, the function list corresponding to the associated content, the method further includes:
displaying, in the function list, all preset contents to be mixed in response to a trigger operation of the first user on the display control.

In this embodiment, because of a large amount of content to be mixed and a limited size of the function list, all content to be mixed cannot be displayed in the function list. Therefore, to enable the first user to view more content to be mixed, a display control may be provided in the function list. All preset contents to be mixed are displayed in the function list in response to a trigger operation of the first user on the display control.

According to the interaction method based on a virtual object provided in this embodiment, all preset contents to be mixed are displayed in the function list in response to a trigger operation of the first user on the display control, so that more contents to be mixed can be provided to the first user for selection by the first user, which in turn enables a resulting interaction result to be more tailored to personalized needs of the first user.

Further, on the basis of any one of the above embodiments, performing the mixing operation on the interactive content and the associated content of the second virtual object to obtain the interaction result includes:
determining mixing information corresponding to the interactive content, wherein the mixing information includes one or more of a group consisting of a mixing range, a mixing position, and a mixing effect corresponding to the interactive content; and
performing, based on the mixing information, the mixing operation on the interactive content and the associated content of the second virtual object to obtain the interaction result.

In this embodiment, different interactive contents have different mixing information during a mixing operation. Therefore, after interactive content selected by a user is determined, mixing information corresponding to the interactive content may be determined, where the mixing information includes one or more of a mixing range, a mixing position, and a mixing effect corresponding to the interactive content. Therefore, a mixing operation may be performed on the interactive content and the associated content of the second virtual object based on the mixing information to obtain the interaction result.

For example, if the interactive content is an emoji, the corresponding mixing information is that the mixing position is at the head of the second virtual object, the mixing range is a range on an upper side of a head area, and the mixing effect is to overwrite the emoji on the head of the second virtual object. Therefore, after the mixing information is obtained, a mixing operation may be performed based on the mixing information.

According to the interaction method based on a virtual object provided in this embodiment, mixing information corresponding to the interactive content is determined, so that a mixing operation is performed on the interactive content and the associated content of the second virtual object based on the mixing information. As such, the accuracy of the mixing operation can be improved, thereby improving the display effect of the interaction result.

Further, on the basis of any one of the above embodiments, step 104 includes:
switching the associated content of the second virtual object currently displayed in the chat interface to the interactive content, wherein the interactive content includes an associated feature in the associated content and an associated feature in the target content to be mixed.

In this embodiment, to enrich display contents in the chat interface and enable the first user to view the interaction result more intuitively, the associated content of the second virtual object currently displayed in the chat interface is switched to the interactive content after the interaction result is generated, where the interactive content includes an associated feature in the associated content and an associated feature in the target content to be mixed.

Fig. 2 is a schematic diagram of interface interaction according to an embodiment of the present disclosure. As shown in Fig. 2, an expression content 22 corresponding to the second virtual object which is sent by the second user may be displayed in a chat interface 21. A function list 23 corresponding to associated content is displayed in a preset display area in response to a preset trigger operation of the first user on the expression content 22, where the function list includes at least one content 24 to be mixed. A target content 24 to be mixed that is selected by the first user is determined as the interactive content in response to a trigger operation of the first user on any of the at least one content 24 to be mixed. A mixing operation is performed on interactive content and associated content of the second virtual object to obtain an interaction result 25. The interaction result 25 is displayed in the chat interface 21.

According to the interaction method based on a virtual object provided in this embodiment, an associated content of the second virtual object currently displayed in the chat interface is switched for display, so that display contents in the chat interface can be further enriched.

Further, on the basis of any one of the above embodiments, after step 104, the method further includes:
displaying, in the preset display area, a function list corresponding to the interaction result in response to a trigger operation of the first user on the interaction result, where the function list includes a favorite control; and
favoriting the interaction result as a new expression content in response to a trigger operation of the first user on the favorite control.

In this embodiment, the first user may further save the interaction result as a new expression content after an expression mixing operation is performed based on the second virtual object to obtain the interaction result. As such, the new expression content can be sent during a subsequent chat.

Optionally, after the interaction result is displayed in the chat interface, a function list corresponding to the interaction result is displayed in a preset display area in response to a trigger operation of the first user on the interaction result, where the function list includes a favorite control. The interaction result is favorited as a new expression content in response to a trigger operation of the first user on the favorite control. The trigger operation includes, but is not limited to, a tap operation, a double-tap operation, a touch-and-hold operation, and the like on the interaction result. As such, the first user can subsequently find the new expression content in the expression list. The new expression content can be triggered during a chat to send the new expression content.

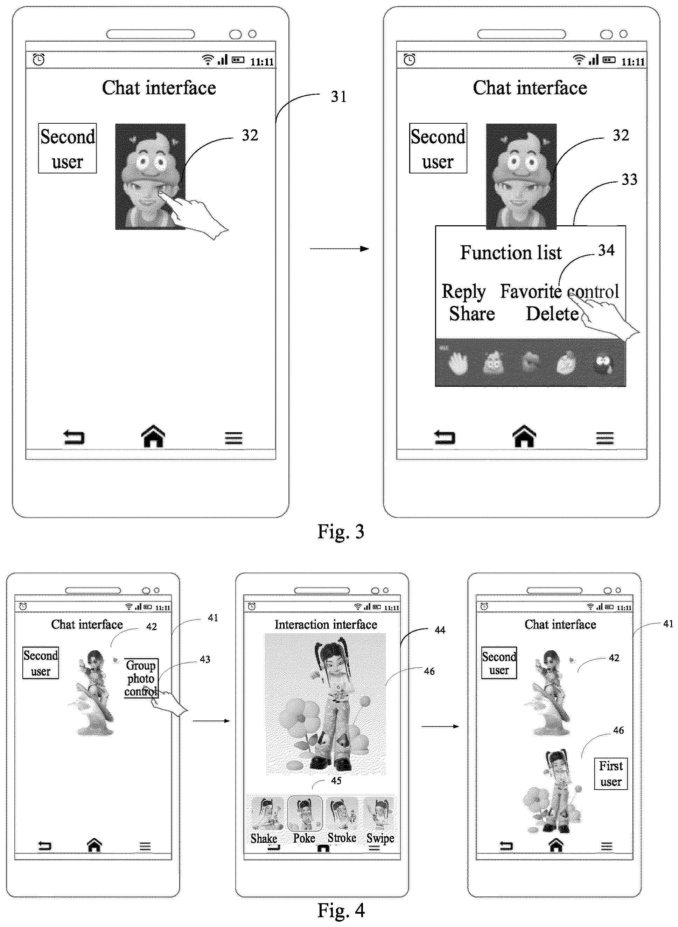

Fig. 3 is another schematic diagram of interface interaction according to an embodiment of the present disclosure. As shown in Fig. 3, an interaction result 32 generated based on an interaction operation of the first user may be displayed in a chat interface 31. A function list 33 corresponding to the interaction result 32 may be displayed in a preset display area in response to a trigger operation of the first user on the interaction result 32, where the function list 33 includes a favorite control 34. A user can favorite the interaction result through a trigger operation on the favorite control 34.

According to the interaction method based on a virtual object provided in this embodiment, a function list including a favorite control is displayed in a preset display area in response to a trigger operation of the first user on the interaction result. The interaction result is favorited as new expression content in response to a trigger operation of the first user on the favorite control. As such, an interaction operation based on a virtual object can be further enriched. In addition, the user is enabled to favorite emojis of interest, thereby improving interaction efficiency.

Optionally, on the basis of any one of the above embodiments, step 101 includes:
displaying, in the chat interface, the second virtual object and/or a group photo content of the second virtual object and a first virtual object corresponding to the first user which is sent by the second user, wherein the first virtual object and the second virtual object in the group photo content respectively perform interaction actions predetermined by the second user.

In this embodiment, the interaction operation performed based on the second virtual object may be a content duet operation based on the second virtual object sent by the second user, and a duet result is sent to the chat interface as interactive content.

Optionally, the second user may send the second virtual object and/or the group photo content of the second virtual object and the first virtual object corresponding to the first user to the first user as associated content of the second virtual object. Therefore, the second virtual object and/or the group photo content of the second virtual object and the first virtual object corresponding to the first user which is sent by the second user may be displayed in the chat interface, where the first virtual object and the second virtual object in the group photo content respectively perform interaction actions predetermined by the second user.

It should be noted that when the associated content of the second virtual object is a group photo content of the second virtual object and the first virtual object, the first virtual object and the second virtual object may perform the same interaction action or may respectively perform different interaction actions. For example, the first virtual object and the second virtual object may perform different interaction actions, and the second virtual object may hold the first virtual object and tap on the first virtual object.

Further, on the basis of any one of the above embodiments, the display area corresponding to the associated content further includes a preset interaction control.

Step 102 includes:
displaying a preset interaction interface in response to a trigger operation of the first user on the interaction control, wherein the interaction interface includes the first virtual object and at least one interaction category;
displaying at least one preset interaction action associated with any interaction category in response to a trigger operation of the first user on the interaction category; and
determining a target preset interaction action selected by the first user and the first virtual object as the interactive content in response to a trigger operation of the first user on any one of the at least one preset interaction action.

In this embodiment, after the associated content is displayed in the chat interface, a preset interaction interface is displayed in response to a trigger operation of the first user on the interaction control, where the interaction interface includes the first virtual object and at least one interaction category. For example, the interaction category may include a conventional interaction category in which the first virtual object may have the same display size as the second virtual object. The interaction category may include a plurality of preset interaction actions, and the first virtual object and the second virtual object may perform the preset interaction actions with a same display size. The interaction category may further include a personalized interaction category in which display sizes of the first virtual object and the second virtual object may be different. For example, the first virtual object may hold the second virtual object to perform a preset interaction action belonging to the category.

Further, after the interaction interface is displayed, at least one preset interaction action associated with any interaction category may be displayed in response to a trigger operation of the first user on the interaction category. A target preset interaction action selected by the first user and the first virtual object are determined as the interactive content in response to a trigger operation of the first user on any preset interaction action.

Further, on the basis of any one of the above embodiments, step 103 includes:
determining a display position relationship between the first virtual object and the second virtual object in the target preset interaction action;
performing a mixing operation on the first virtual object and the second virtual object based on the display position relationship to obtain a mixed combined virtual object; and
triggering the mixed combined virtual object to perform the target preset interaction action to obtain the interactive content,
where the first virtual object and the second virtual object respectively perform different actions when the combined virtual object performs the target preset interaction action.

Alternatively, step 103 includes:
triggering the first virtual object to perform the target preset interaction operation to obtain the interactive content.

In this embodiment, the display position relationship between the first virtual object and the second virtual object may be different in different target preset interaction actions. For example, the first virtual object and the second virtual object may be in a side-by-side display position relationship, or the first virtual object may hold the second virtual object, or the like.

Therefore, after the target preset interaction action currently selected by the first user is determined, the display position relationship between the first virtual object and the second virtual object in the target preset interaction action may be determined. A mixing operation is performed on the first virtual object and the second virtual object based on the display position relationship to obtain a mixed combined virtual object. The mixed combined virtual object is controlled to perform the target preset interaction action to obtain the interactive content.

It should be noted that the first virtual object and the second virtual object may respectively perform different actions when the target preset interaction action is performed. Alternatively, the first virtual object and the second virtual object may perform the same action.

As an implementation, the interactive content generated by the first user based on the associated content may be the first virtual object that performs the target preset interaction action. Therefore, after the first user selects the target preset interaction action, the first virtual object may be controlled to perform the target preset interaction operation to obtain the interactive content.

Fig. 4 is another schematic diagram of interface interaction according to an embodiment of the present disclosure. As shown in Fig. 4, a chat interface 41 may display a group photo content 42 of the second virtual object and the first virtual object corresponding to the first user which is sent by the second user, and an interaction control 43 is further displayed at a position associated with the group photo content. A preset interaction interface 44 is displayed in response to a trigger operation of the first user on the interaction control 43, where the interaction interface 44 includes at least one preset interaction action 45. A target preset interaction action 45 selected by the first user and the first virtual object are determined as the interactive content in response to a trigger operation of the first user on any preset interaction action 45. A mixing operation is performed on the first virtual object and the second virtual object, and the mixed combined virtual object is controlled to perform the target preset interaction action 45 selected by the user to obtain an interactive content 46. Further, an interaction result (not shown in the figure) generated by the group photo content 42 and the interactive content 46 may be displayed in the chat interface 41.

According to the interaction method based on a virtual object provided in this embodiment, the second virtual object and/or the group photo content of the second virtual object and the first virtual object corresponding to the first user which is sent by the second user is displayed in the chat interface, so that a preset interaction interface is displayed in response to a trigger operation of the first user on the preset interaction control. As such, the first user can select interactive content in the interaction interface. Further, a mixing operation can be performed on the first virtual object and the second virtual object based on the interactive content to generate the interaction result, thereby enriching interaction manners based on a virtual object and improving user experience.

Further, on the basis of any one of the above embodiments, the method further includes:
storing the interaction result as a new expression content associated with the second virtual object.

In this embodiment, after the interaction result is generated based on the associated content corresponding to the second virtual object, the first user may further store the interaction result as new expression content associated with the second virtual object. Optionally, the first user may display a function list, and trigger a favorite control in the function list, through a preset trigger operation on the interaction result, to store the interaction result.

According to the interaction method based on a virtual object provided in this embodiment, the interaction result is stored as new expression content associated with the second virtual object, so that interaction manners in the chat interface can be further enriched. In addition, the user is enabled to favorite emojis of interest, thereby improving interaction efficiency.

Further, on the basis of any one of the above embodiments, the method further includes:
generating an interaction media content based on the interaction result; and
displaying, in the chat interface, a view control associated with the interaction media content;
and/or the method further includes:
   generating an interaction image based on the interaction result; and
   displaying, in the chat interface, the interaction image and a save control associated with the interaction image.

In this embodiment, after the interactive content generated by the first user is obtained, an interaction operation may be performed with the second virtual object based on the interactive content to obtain the interaction result. Taking the first virtual object that performs the target preset interaction operation as an interactive content, for example, an interaction poster may be generated based on associated content of the first virtual object that performs the target preset interaction operation and the second virtual object, and the interaction poster may be displayed in the chat interface in a preset display form to obtain an interaction result. It can be understood that the interaction result may be any form of content such as a picture and a video.

Optionally, after the first user generates an interaction result based on the associated content corresponding to the second virtual object, an interaction media content may be automatically generated based on the interaction result and the associated content. The interaction media content may include the interaction result or may include a process of generating the interaction result based on the associated content. This is not limited in the present disclosure.

Further, to help the first user perform interaction operations such as viewing and editing based on the interaction media content, a view control associated with the interaction media content may be further displayed in the chat interface. As such, the first user can perform interaction operations such as viewing, editing, and posting on interaction media content by triggering the view control.

Optionally, after the first user generates an interaction result based on the associated content corresponding to the second virtual object, an interaction image may be further automatically generated based on the interaction result, and the interaction image may include static associated content and the interaction result.

Further, to help the first user perform subsequent interaction operations based on the interaction image, the interaction image and a save control associated with the interaction image may be further displayed in the chat interface.

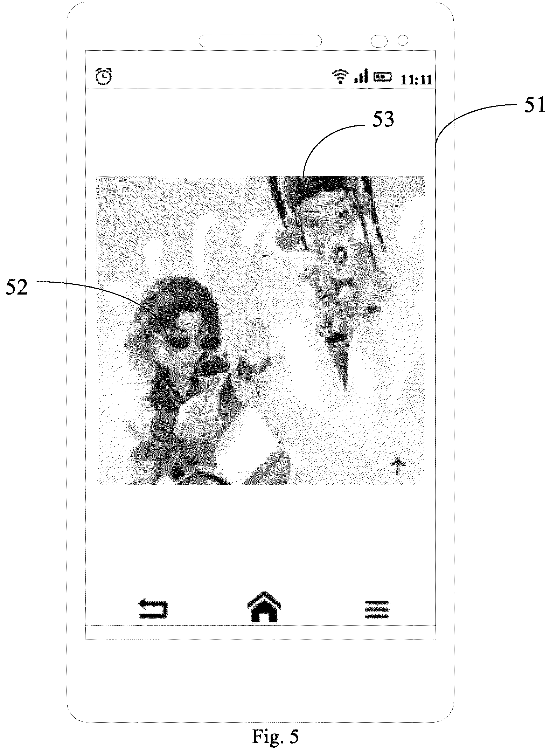

Fig. 5 is a schematic diagram of a display interface according to an embodiment of the present disclosure. As shown in Fig. 5, an interaction image 51 includes an interaction result that may include first a group photo content 52 sent by the second user and second a group photo content 53 generated by the first user based on the group photo content sent by the second user.

According to the interaction method based on a virtual object provided in this embodiment, the interaction media content and/or the interaction image are/is generated based on the interaction result, so that the first user can view an interaction result corresponding to the current interaction operation more intuitively, and interaction manners based on a virtual object can be enriched.

Further, on the basis of any one of the above embodiments, after the displaying, in the chat interface, a view control associated with the interaction media content, the method further includes:
displaying, in a media content editing interface, the interaction media content in response to a trigger operation of the first user on the view control.

In this embodiment, after the view control associated with the interaction media content is displayed in the chat interface, the first user may perform a trigger operation on the view control. A media content editing interface may be displayed in response to the trigger operation. The interaction media content may be displayed in the media content editing interface. The first user may perform an editing operation on the interaction media content in the media content editing interface. The editing operation includes, but is not limited to, editing operations such as hue editing, duration adjustment, and addition of a special transition effect.

Further, on the basis of any one of the above embodiments, the media content editing interface further includes a post control.

After displaying, in the media content editing interface, the interaction media content in response to the trigger operation of the first user on the view control, the method further includes:
posting the interaction media content in response to a trigger operation of the first user on the post control.

In this embodiment, the media content editing interface further includes a post control. A trigger operation may be performed on the post control after the first user completes an editing operation on the interaction result in the media content editing interface. The interaction media content is posted in response to a trigger operation of the first user on the post control. As such, another user can subsequently browse the interaction media content in a media content stream.

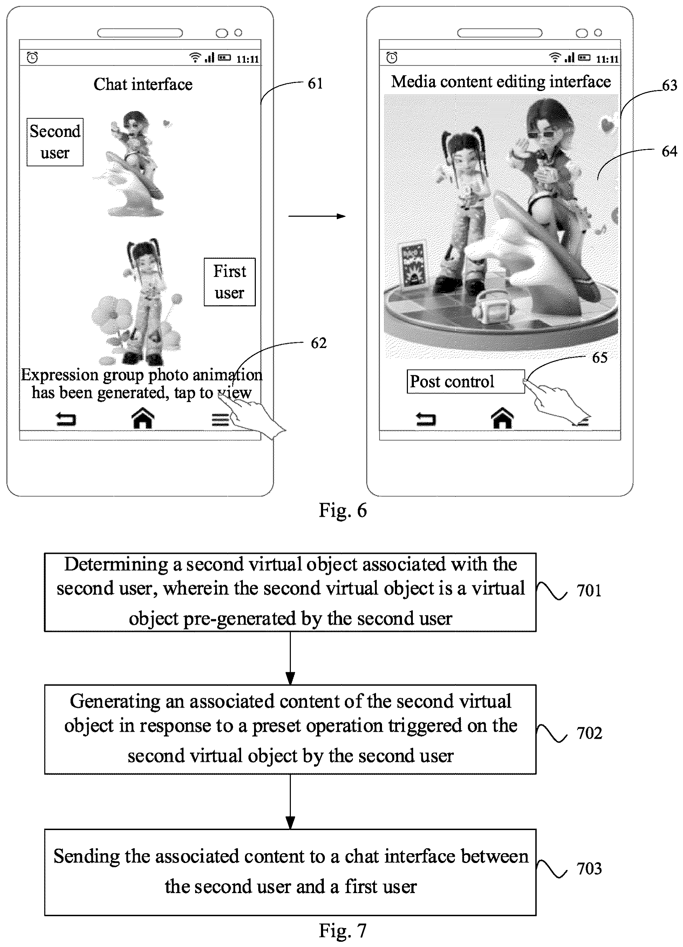

Fig. 6 is another schematic diagram of interface interaction according to an embodiment of the present disclosure. As shown in Fig. 6, after interaction media content is generated based on an interaction result, a view control 62 associated with the interaction media content may be displayed in a chat interface 61. interaction media content 64 may be displayed in a media content editing interface 63 in response to a trigger operation of the first user on the view control 62. The media content editing interface 63 further includes a post control 65. The interaction media content 64 may be posted in response to a trigger operation of the first user on the post control 65.

According to the interaction method based on a virtual object provided in this embodiment, the interaction media content is displayed in the media content editing interface in response to a trigger operation of the first user on the view control, so that the first user can perform an editing operation on the interaction media content according to actual needs, which enables the interaction media content to be more tailored to personalized needs of the first user. In addition, the interaction media content is posted in response to a trigger operation of the first user on the post control. As such, the convenience of posting an interaction media content can be improved, thereby improving posting efficiency.

Optionally, on the basis of any one of the above embodiments, after displaying, in the chat interface, the interaction image and the save control associated with the interaction image, the method further includes:
saving the interaction image in response to a trigger operation of the first user on the save control.

In this embodiment, a save control associated with an interaction image may be further displayed in the chat interface. After the interaction image is displayed, the first user may store the interaction image to a preset storage path through a trigger operation on the save control. As such, subsequent operations such as viewing and sharing can be performed on the interaction image.

According to the interaction method based on a virtual object provided in this embodiment, the interaction image is saved in response to a trigger operation of the first user on the save control, so that a user can quickly save interaction images of interest, thereby improving operation efficiency.

Fig. 7 is a schematic flowchart of an interaction method based on a virtual object, applied to a client of a second user, according to an embodiment of the present disclosure. As shown in Fig. 7, the method includes the following steps.

Step 701: determining a second virtual object associated with the second user, wherein the second virtual object is a virtual object pre-generated by the second user.

Step 702: generating an associated content of the second virtual object in response to a preset operation triggered on the second virtual object by the second user.

Step 703: sending the associated content to a chat interface between the second user and a first user, so that the first user performs a preset operation based on the associated content to determine an interactive content, performs an interaction operation with the second virtual object based on the interactive content to generate an interaction result, and displays the interaction result in the chat interface, wherein the first user is a user having a preset association relationship with the second user.

A subject of execution of this embodiment is an interaction apparatus based on a virtual object. The interaction apparatus based on a virtual object may be coupled to a terminal device of the second user, so that an interaction operation based on a virtual object can be performed based on a trigger operation of the second user. Optionally, the interaction apparatus based on a virtual object may also be coupled to a server communicatively connected to the terminal device of the second user. As such, based on the trigger operation of the second user on the terminal device, the terminal device can be controlled to perform an interaction operation based on a virtual object.

In this embodiment, the second user may pre-generate a second virtual object. For example, the second virtual object may be a three-dimensional virtual object generated by the second user according to actual needs. When the first user interacts with the second user in a chat interface, the second user determines a second virtual object, and triggers a preset operation on the second virtual object to generate associated content. After the associated content is generated, the associated content of the second virtual object may be sent to the first user.

As such, after the first user obtains the associated content, the first user can trigger a preset operation on the associated content according to actual needs and determine interactive content corresponding to the preset operation. After the interactive content corresponding to the preset operation is determined, an interaction operation may be performed with the second virtual object based on the interactive content to obtain an interaction result. Finally, to enrich display content in the chat interface and enable the first user to view the interaction result more intuitively, the interaction result may be displayed in an interaction interface after the interaction result is generated.

According to the interaction method based on a virtual object provided in this embodiment, a second virtual object associated with the second user is determined, where the second virtual object is a virtual object pre-generated by the second user, so that associated content of the second virtual object is generated in response to a preset operation triggered on the second virtual object by the second user. The associated content is sent to a chat interface between the second user and the first user, so that the first user can perform an interaction operation based on a virtual object based on the associated content after obtaining the associated content, thereby enriching interaction manners based on a virtual object and improving a display effect.

Further, on the basis of any one of the above embodiments, step 702 includes:
displaying, in the chat interface, an expression list corresponding to the second virtual object, wherein the expression list includes at least one expression content to be selected corresponding to the second virtual object; and
determining, in response to a selection operation of the second user in the expression list, an expression content to be selected that is selected by the second user as the associated content.

In this embodiment, the interaction operation based on the second virtual object may be an expression mixing operation. The associated content of the second virtual object may be any expression content associated with the second virtual object. Therefore, to generate an associated content, an expression list corresponding to the second virtual object is displayed in the chat interface, where the expression list includes at least one expression content to be selected corresponding to the second virtual object. An expression content to be selected that is selected by the second user is determined as the associated content in response to a selection operation of the second user in the expression list.

According to the interaction method based on a virtual object provided in this embodiment, an expression content to be selected that is associated with the second virtual object selected by the second user is determined as the associated content, so that the first user can subsequently perform an expression mixing operation based on the associated content, thereby enriching interaction manners based on a virtual object and improving the display effect.

Further, on the basis of any one of the above embodiments, step 702 includes:
redirecting to a group photo interaction interface associated with the first user in response to a preset trigger operation of the second user for the first user; and
generating, in the group photo interaction interface, the associated content of the second virtual object.

In this embodiment, the interaction operation performed based on the second virtual object may be an operation to generate a group photo content, so that the first user can perform a content duetting operation based on the associated content of the second virtual object which is sent by the second user and send a duet result to the chat interface as interactive content.

Therefore, it is possible to redirect to the group photo interaction interface associated with the first user in response to the preset trigger operation by the second user for the first user. Associated content of the second virtual object may be generated in the group photo interaction interface. The associated content may be a group photo content from performing a preset interaction action by the first virtual object and the second virtual object, or the associated content may be content from performing a preset interaction action by the second virtual object.

Further, on the basis of any one of the above embodiments, the group photo interaction interface includes at least one interaction category.

Step 702 includes:
displaying, in response to a selection operation of the first user on the at least one interaction category, at least one preset interaction action associated with a target interaction category selected by the first user;
determining a display position relationship between the second virtual object and a first virtual object corresponding to the first user in any of the at least one preset interaction action in response to a selection operation of the first user on the preset interaction action;
performing a mixing operation on the first virtual object and the second virtual object based on the display position relationship to obtain a combined virtual object; and
triggering the combined virtual object to perform the preset interaction action to obtain the associated content of the second virtual object.

In this embodiment, the group photo interaction interface includes at least one interaction category. For example, the interaction category may include a conventional interaction category in which the first virtual object may have the same display size as the second virtual object. The interaction category may include a plurality of preset interaction actions, and the first virtual object and the second virtual object may perform the preset interaction actions with the same display size. The interaction category may further include a personalized interaction category in which display sizes of the first virtual object and the second virtual object may be different. For example, the first virtual object may hold the second virtual object to perform a preset interaction action belonging to the category.

At least one preset interaction action associated with a target interaction category selected by the first user may be displayed in response to a selection operation of the first user on the interaction category. The display position relationship between the first virtual object and the second virtual object may be different in different preset interaction actions. For example, the first virtual object and the second virtual object may be in a side-by-side display position relationship, or the first virtual object may hold the second virtual object, or the like. Therefore, a display position relationship between the second virtual object and the first virtual object corresponding to the first user in any preset interaction action may be determined in response to a selection operation of the first user on the preset interaction action. A mixing operation is performed on the first virtual object and the second virtual object based on the display position relationship to obtain a combined virtual object. The combined virtual object is controlled to perform the preset interaction action to obtain the associated content of the second virtual object.

It should be noted that the first virtual object and the second virtual object may respectively perform different actions when the preset interaction action is performed. Alternatively, the first virtual object and the second virtual object may perform the same action.

According to the interaction method based on a virtual object provided in this embodiment, a group photo content is generated based on the first virtual object and the second virtual object, and the group photo content is determined as associated content of the second virtual object, so that the first user can subsequently perform a duet operation based on the associated content, and can post or save duet media content or duet image generated after duetting, thereby further enriching interaction manners based on a virtual object.

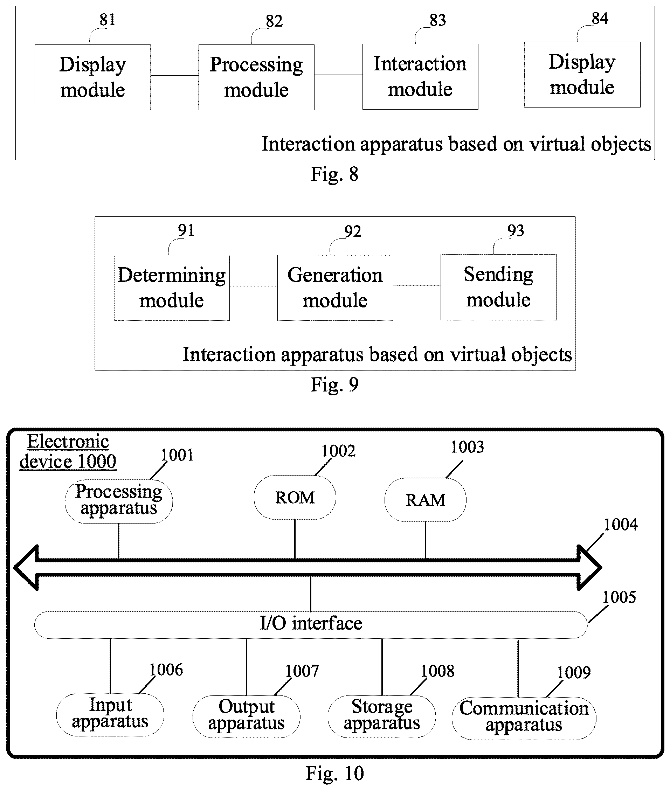

Fig. 8 is a schematic diagram of a structure of an interaction apparatus based on a virtual object, applied to a client of a first user, according to an embodiment of the present disclosure. As shown in Fig. 8, the apparatus includes: a display module 81, a processing module 82, an interaction module 83, and a display module 84. The display module 81 is configured to display, in a chat interface between the first user and a second user, an associated content of a second virtual object which is sent by the second user, where the second user is a user having a preset association relationship with the first user, and the second virtual object is a virtual object pre-generated by the second user. The processing module 82 is configured to determine, in response to a preset operation triggered by the first user based on the associated content, an interactive content corresponding to the preset operation. The interaction module 83 is configured to perform an interaction operation with the second virtual object based on the interactive content to obtain an interaction result. The display module 84 is configured to display the interaction result in the chat interface between the first user and the second user.

Further, on the basis of any one of the above embodiments, the display module is configured to: display, in the chat interface, any expression content associated with the second virtual object which is sent by the second user.

Further, on the basis of any one of the above embodiments, the processing module is configured to: display, in a preset display area, a function list corresponding to the associated content in response to a preset trigger operation of the first user on the associated content, wherein the function list includes at least one content to be mixed; and determine, in response to a trigger operation of the first user on any of the at least one content to be mixed, a target content to be mixed that is selected by the first user as the interactive content.

Further, on the basis of any one of the above embodiments, the content to be mixed includes one or more of a group consisting of an emoji, an image content, and a text content.

Further, on the basis of any one of the above embodiments, the function list further includes a preset display control. The processing module is configured to: display, in the function list, all preset contents to be mixed in response to a trigger operation of the first user on the display control.

Further, on the basis of any one of the above embodiments, the interaction module is configured to: perform a mixing operation on the interactive content and the associated content of the second virtual object to obtain the interaction result.

Further, on the basis of any one of the above embodiments, the interaction module is configured to: determine mixing information corresponding to the interactive content, wherein the mixing information includes one or more of a group consisting of a mixing range, a mixing position, and a mixing effect corresponding to the interactive content; and perform, based on the mixing information, the mixing operation on the interactive content and the associated content of the second virtual object to obtain the interaction result.

Further, on the basis of any one of the above embodiments, the interaction module is configured to: switch the associated content of the second virtual object currently displayed in the chat interface to the interactive content, wherein the interactive content includes an associated feature in the associated content and an associated feature in the target content to be mixed.

Further, on the basis of any one of the above embodiments, the apparatus further includes: a display module configured to display, in the preset display area, a function list corresponding to the interaction result in response to a trigger operation of the first user on the interaction result, wherein the function list includes a favorite control; and a favorite module configured to favorite the interaction result as a new expression content in response to a trigger operation of the first user on the favorite control.

Further, on the basis of any one of the above embodiments, the display module is configured to: display, in the chat interface, the second virtual object and/or a group photo content of the second virtual object and a first virtual object corresponding to the first user which is sent by the second user, wherein the first virtual object and the second virtual object in the group photo content respectively perform interaction actions predetermined by the second user.

Further, on the basis of any one of the above embodiments, the display area corresponding to the associated content further includes a preset interaction control. The processing module is configured to: display a preset interaction interface in response to a trigger operation of the first user on the interaction control, wherein the interaction interface includes the first virtual object and at least one interaction category; display at least one preset interaction action associated with any interaction category in response to a trigger operation of the first user on the interaction category; and determine a target preset interaction action selected by the first user and the first virtual object as the interactive content in response to a trigger operation of the first user on any one of the at least one preset interaction action.

Further, on the basis of any one of the above embodiments, the processing module is configured to: determine a display position relationship between the first virtual object and the second virtual object in the target preset interaction action; perform a mixing operation on the first virtual object and the second virtual object based on the display position relationship to obtain a mixed combined virtual object; and trigger the mixed combined virtual object to perform the target preset interaction action to obtain the interactive content, wherein the first virtual object and the second virtual object respectively perform different actions when the combined virtual object performs the target preset interaction action. Alternatively, the processing module is configured to: trigger the first virtual object to perform the target preset interaction operation to obtain the interactive content.

Further, on the basis of any one of the above embodiments, the apparatus further includes: a storage module configured to store the interaction result as a new expression content associated with the second virtual object.

Further, on the basis of any one of the above embodiments, the apparatus further includes: a generation module configured to generate an interaction media content based on the interaction result; a display module configured to display, in the chat interface, a view control associated with the interaction media content; and/or the apparatus further includes: a generation module configured to generate an interaction image based on the interaction result; and a display module configured to display, in the chat interface, the interaction image and a save control associated with the interaction image.

Further, on the basis of any one of the above embodiments, the apparatus further includes: a display module configured to display, in a media content editing interface, the interaction media content in response to a trigger operation of the first user on the view control.

Further, on the basis of any one of the above embodiments, the media content editing interface further includes a post control. The apparatus further includes: a posting module configured to post the interaction media content in response to a trigger operation of the first user on the post control.

Further, on the basis of any one of the above embodiments, the apparatus further includes: a storage module configured to save the interaction image in response to a trigger operation of the first user on the save control.

Fig. 9 is a schematic diagram of a structure of an interaction apparatus based on a virtual object, applied to a client of a second user, according to an embodiment of the present disclosure. As shown in Fig. 9, the apparatus includes: a determining module 91, a generation module 92, and a sending module 93. The determining module 91 is configured to determine a second virtual object associated with the second user, where the second virtual object is a virtual object pre-generated by the second user. The generation module 92 is configured to generate associated content of the second virtual object in response to a preset operation triggered on the second virtual object by the second user. The sending module 93 is configured to send the associated content to a chat interface between the second user and a first user, so that the first user performs a preset operation based on the associated content to determine interactive content, performs an interaction operation with the second virtual object based on the interactive content to generate an interaction result, and displays the interaction result in the chat interface, where the first user is a user having a preset association relationship with the second user.

Further, on the basis of any one of the above embodiments, the generation module is configured to: display, in the chat interface, an expression list corresponding to the second virtual object, wherein the expression list includes at least one expression content to be selected corresponding to the second virtual object; and determine, in response to a selection operation of the second user in the expression list, an expression content to be selected that is selected by the second user as the associated content.

Further, on the basis of any one of the above embodiments, the generation module is configured to: redirect to a group photo interaction interface associated with the first user in response to a preset trigger operation of the second user for the first user; and generate, in the group photo interaction interface, the associated content of the second virtual object.

Further, on the basis of any one of the above embodiments, the group photo interaction interface includes at least one interaction category. The generation module is configured to: display, in response to a selection operation of the first user on the at least one interaction category, at least one preset interaction action associated with a target interaction category selected by the first user; determine a display position relationship between the second virtual object and a first virtual object corresponding to the first user in any of the at least one preset interaction action in response to a selection operation of the first user on the preset interaction action; perform a mixing operation on the first virtual object and the second virtual object based on the display position relationship to obtain a combined virtual object; and trigger the combined virtual object to perform the preset interaction action to obtain the associated content of the second virtual object.

The device provided in this embodiment may be configured to perform the technical solution of the above method embodiment. The implementation principle and technical effects thereof are similar and are not described herein again in this embodiment.

To implement the above embodiments, an embodiment of the present disclosure further provides an electronic device. The electronic device includes: a processor and a memory.

The memory stores computer-executable instructions.

The processor executes the computer-executable instructions stored in the memory that cause the processor to perform the interaction method based on a virtual object according to any one of the above embodiments.

Fig. 10 is a schematic diagram of a structure of an electronic device according to an embodiment of the present disclosure. As shown in Fig. 10, the electronic device 1000 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in Fig. 10 is merely an example, and shall not impose any limitation on the function and scope of use of the embodiments of the present disclosure.

As shown in Fig. 10, the electronic device 1000 may include a processing apparatus (e.g., a central processing unit or a graphics processing unit) 1001 that may perform a variety of appropriate actions and processing in accordance with a program stored in a read-only memory (ROM) 1002 or a program loaded from a storage apparatus 1008 into a random access memory (RAM) 1003. The RAM 1003 further stores various programs and data required for the operation of the electronic device 1000. The processing apparatus 1001, the ROM 1002, and the RAM 1003 are connected to one another through a bus 1004. An input/output (I/O) interface 1005 is also connected to the bus 1004.

Generally, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a tape and a hard disk; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1009, installed from the storage apparatus 1008, or installed from the ROM 1002. When the computer program is executed by the processing apparatus 1001, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may be further any computer-readable medium other than the computer-readable storage medium. The computer-readable signal medium can transmit, propagate, or send a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

To implement the above embodiments, an embodiment of the present disclosure further provides a computer-readable storage medium having stored therein computer-executable instructions that, when executed by a processor, cause the interaction method based on a virtual object according to any one of the above embodiments to be implemented.

To implement the above embodiments, an embodiment of the present disclosure further provides a computer program product including a computer program that, when executed by a processor, causes the interaction method based on a virtual object according to any one of the above embodiments to be implemented.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, an interaction method based on a virtual object, applied to a client of a first user, is provided. The method includes:
displaying, in a chat interface between the first user and a second user, an associated content of a second virtual object which is sent by the second user, wherein the second user is a user having a preset association relationship with the first user, and the second virtual object is a virtual object pre-generated by the second user;
determining, in response to a preset operation triggered by the first user based on the associated content, an interactive content corresponding to the preset operation;
performing an interaction operation with the second virtual object based on the interactive content, to obtain an interaction result; and
displaying the interaction result in the chat interface between the first user and the second user.

According to one or more embodiments of the present disclosure, wherein displaying, in the chat interface between the first user and the second user, the associated content of the second virtual object which is sent by the second user includes:
displaying, in the chat interface, any expression content associated with the second virtual object which is sent by the second user.

According to one or more embodiments of the present disclosure, wherein determining, in response to the preset operation triggered by the first user based on the associated content, an interactive content corresponding to the preset operation includes:
displaying, in a preset display area, a function list corresponding to the associated content in response to a preset trigger operation of the first user on the associated content, wherein the function list includes at least one content to be mixed; and
determining, in response to a trigger operation of the first user on any of the at least one content to be mixed, a target content to be mixed that is selected by the first user as the interactive content.

According to one or more embodiments of the present disclosure, the content to be mixed includes one or more of a group consisting of an emoji, an image content, and a text content.

According to one or more embodiments of the present disclosure, wherein the function list further includes a preset display control; and
after displaying, in the preset display area, the function list corresponding to the associated content, the method further includes:
displaying, in the function list, all preset contents to be mixed in response to a trigger operation of the first user on the display control.

According to one or more embodiments of the present disclosure, wherein performing the interaction operation with the second virtual object based on the interactive content to obtain the interaction result includes:
performing a mixing operation on the interactive content and the associated content of the second virtual object to obtain the interaction result.

According to one or more embodiments of the present disclosure, wherein performing the mixing operation on the interactive content and the associated content of the second virtual object to obtain the interaction result includes:
determining mixing information corresponding to the interactive content, wherein the mixing information includes one or more of a group consisting of a mixing range, a mixing position, and a mixing effect corresponding to the interactive content; and
performing, based on the mixing information, the mixing operation on the interactive content and the associated content of the second virtual object to obtain the interaction result.

According to one or more embodiments of the present disclosure, wherein displaying the interaction result in the chat interface between the first user and the second user includes:
switching the associated content of the second virtual object currently displayed in the chat interface to the interactive content, wherein the interactive content includes an associated feature in the associated content and an associated feature in the target content to be mixed.

According to one or more embodiments of the present disclosure, wherein after displaying the interaction result in the chat interface between the first user and the second user, the method further includes:
displaying, in the preset display area, a function list corresponding to the interaction result in response to a trigger operation of the first user on the interaction result, wherein the function list includes a favorite control; and
favoriting the interaction result as a new expression content in response to a trigger operation of the first user on the favorite control.

According to one or more embodiments of the present disclosure, wherein displaying, in the chat interface between the first user and the second user, the associated content of the second virtual object which is sent by the second user includes:
displaying, in the chat interface, the second virtual object and/or a group photo content of the second virtual object and a first virtual object corresponding to the first user which is sent by the second user, wherein the first virtual object and the second virtual object in the group photo content respectively perform interaction actions predetermined by the second user.

According to one or more embodiments of the present disclosure, wherein the display area corresponding to the associated content further includes a preset interaction control; and
determining, in response to the preset operation triggered by the first user based on the associated content, the interactive content corresponding to the preset operation includes:
displaying a preset interaction interface in response to a trigger operation of the first user on the interaction control, wherein the interaction interface includes the first virtual object and at least one interaction category;
displaying at least one preset interaction action associated with any interaction category in response to a trigger operation of the first user on the interaction category; and
determining a target preset interaction action selected by the first user and the first virtual object as the interactive content in response to a trigger operation of the first user on any one of the at least one preset interaction action.

According to one or more embodiments of the present disclosure, wherein determining the target preset interaction action selected by the first user and the first virtual object as the interactive content includes:
determining a display position relationship between the first virtual object and the second virtual object in the target preset interaction action;
performing a mixing operation on the first virtual object and the second virtual object based on the display position relationship to obtain a mixed combined virtual object; and
triggering the mixed combined virtual object to perform the target preset interaction action to obtain the interactive content,
wherein the first virtual object and the second virtual object respectively perform different actions when the combined virtual object performs the target preset interaction action;
alternatively, determining the target preset interaction action selected by the first user and the first virtual object as the interactive content includes:
   triggering the first virtual object to perform the target preset interaction operation to obtain the interactive content.

According to one or more embodiments of the present disclosure, wherein after performing the interaction operation with the second virtual object based on the interactive content to obtain the interaction result, the method further includes:
storing the interaction result as a new expression content associated with the second virtual object.

According to one or more embodiments of the present disclosure, the method further includes:
generating an interaction media content based on the interaction result; and
displaying, in the chat interface, a view control associated with the interaction media content;
   and/or
the method further includes:
   generating an interaction image based on the interaction result; and
   displaying, in the chat interface, the interaction image and a save control associated with the interaction image.

According to one or more embodiments of the present disclosure, wherein after displaying, in the chat interface, the view control associated with the interaction media content, the method further includes:
displaying, in a media content editing interface, the interaction media content in response to a trigger operation of the first user on the view control.

According to one or more embodiments of the present disclosure, wherein the media content editing interface further includes a post control; and
after displaying, in the media content editing interface, the interaction media content in response to the trigger operation of the first user on the view control, the method further includes:
posting the interaction media content in response to a trigger operation of the first user on the post control.

According to one or more embodiments of the present disclosure, wherein after displaying, in the chat interface, the interaction image and the save control associated with the interaction image, the method further includes:
saving the interaction image in response to a trigger operation of the first user on the save control.

According to one or more embodiments of the present disclosure, an interaction method based on a virtual object, applied to a client of a second user, is provided. The method includes:
determining a second virtual object associated with the second user, wherein the second virtual object is a virtual object pre-generated by the second user;
generating an associated content of the second virtual object in response to a preset operation triggered on the second virtual object by the second user; and
sending the associated content to a chat interface between the second user and a first user, so that the first user performs a preset operation based on the associated content to determine an interactive content, performs an interaction operation with the second virtual object based on the interactive content to generate an interaction result, and displays the interaction result in the chat interface, wherein the first user is a user having a preset association relationship with the second user.

According to one or more embodiments of the present disclosure, wherein generating the associated content of the second virtual object in response to the preset operation triggered on the second virtual object by the second user includes:
displaying, in the chat interface, an expression list corresponding to the second virtual object, wherein the expression list includes at least one expression content to be selected corresponding to the second virtual object; and
determining, in response to a selection operation of the second user in the expression list, an expression content to be selected that is selected by the second user as the associated content.

According to one or more embodiments of the present disclosure, wherein generating the associated content of the second virtual object in response to the preset operation triggered on the second virtual object by the second user includes:
redirecting to a group photo interaction interface associated with the first user in response to a preset trigger operation of the second user for the first user; and
generating, in the group photo interaction interface, the associated content of the second virtual object.

According to one or more embodiments of the present disclosure, wherein the group photo interaction interface includes at least one interaction category; and
generating, in the group photo interaction interface, the associated content of the second virtual object includes:
displaying, in response to a selection operation of the first user on the at least one interaction category, at least one preset interaction action associated with a target interaction category selected by the first user;
determining a display position relationship between the second virtual object and a first virtual object corresponding to the first user in any of the at least one preset interaction action in response to a selection operation of the first user on the preset interaction action;
performing a mixing operation on the first virtual object and the second virtual object based on the display position relationship to obtain a combined virtual object; and
triggering the combined virtual object to perform the preset interaction action to obtain the associated content of the second virtual object.

According to one or more embodiments of the present disclosure, an interaction apparatus based on a virtual object, applied to a client of a first user is provided. The apparatus includes:
a display module configured to display, in a chat interface between the first user and a second user, an associated content of a second virtual object which is sent by the second user, wherein the second user is a user having a preset association relationship with the first user, and the second virtual object is a virtual object pre-generated by the second user;
a processing module configured to determine, in response to a preset operation triggered by the first user based on the associated content, an interactive content corresponding to the preset operation;
an interaction module configured to perform an interaction operation with the second virtual object based on the interactive content to obtain an interaction result; and
a display module configured to display the interaction result in the chat interface between the first user and the second user.

According to one or more embodiments of the present disclosure, the display module is configured to:
display, in the chat interface, any expression content associated with the second virtual object which is sent by the second user.

According to one or more embodiments of the present disclosure, the processing module is configured to:
display, in a preset display area, a function list corresponding to the associated content in response to a preset trigger operation of the first user on the associated content, wherein the function list includes at least one content to be mixed; and
determine, in response to a trigger operation of the first user on any of the at least one content to be mixed, a target content to be mixed that is selected by the first user as the interactive content.

According to one or more embodiments of the present disclosure, the content to be mixed includes one or more of a group consisting of an emoji, an image content, and a text content.

According to one or more embodiments of the present disclosure, the function list further includes a preset display control; and
the processing module is configured to:
display, in the function list, all preset contents to be mixed in response to a trigger operation of the first user on the display control.

According to one or more embodiments of the present disclosure, the interaction module is configured to:
perform a mixing operation on the interactive content and the associated content of the second virtual object to obtain the interaction result.

According to one or more embodiments of the present disclosure, the interaction module is configured to:
determine mixing information corresponding to the interactive content, wherein the mixing information includes one or more of a group consisting of a mixing range, a mixing position, and a mixing effect corresponding to the interactive content; and
perform, based on the mixing information, the mixing operation on the interactive content and the associated content of the second virtual object to obtain the interaction result.

According to one or more embodiments of the present disclosure, the interaction module is configured to:
switch the associated content of the second virtual object currently displayed in the chat interface to the interactive content, wherein the interactive content includes an associated feature in the associated content and an associated feature in the target content to be mixed.

According to one or more embodiments of the present disclosure, the apparatus further includes:
a display module configured to display, in the preset display area, a function list corresponding to the interaction result in response to a trigger operation of the first user on the interaction result, wherein the function list includes a favorite control; and
a favorite module configured to favorite the interaction result as a new expression content in response to a trigger operation of the first user on the favorite control.

According to one or more embodiments of the present disclosure, the display module is configured to:
display, in the chat interface, the second virtual object and/or a group photo content of the second virtual object and a first virtual object corresponding to the first user which is sent by the second user, wherein the first virtual object and the second virtual object in the group photo content respectively perform interaction actions predetermined by the second user.

According to one or more embodiments of the present disclosure, the display area corresponding to the associated content further includes a preset interaction control;
the processing module is configured to:
display a preset interaction interface in response to a trigger operation of the first user on the interaction control, wherein the interaction interface includes the first virtual object and at least one interaction category;
display at least one preset interaction action associated with any interaction category in response to a trigger operation of the first user on the interaction category; and
determine a target preset interaction action selected by the first user and the first virtual object as the interactive content in response to a trigger operation of the first user on any one of the at least one preset interaction action.

According to one or more embodiments of the present disclosure, the processing module is configured to:
determine a display position relationship between the first virtual object and the second virtual object in the target preset interaction action;
perform a mixing operation on the first virtual object and the second virtual object based on the display position relationship to obtain a mixed combined virtual object; and
trigger the mixed combined virtual object to perform the target preset interaction action to obtain the interactive content,
wherein the first virtual object and the second virtual object respectively perform different actions when the combined virtual object performs the target preset interaction action;
alternatively, the processing module is configured to:
   trigger the first virtual object to perform the target preset interaction operation to obtain the interactive content.

According to one or more embodiments of the present disclosure, the apparatus further includes:
a storage module configured to store the interaction result as a new expression content associated with the second virtual object.

According to one or more embodiments of the present disclosure, the apparatus further includes:
a generation module configured to generate an interaction media content based on the interaction result;
a display module configured to display, in the chat interface, a view control associated with the interaction media content;
and/or the apparatus further includes:
   a generation module configured to generate an interaction image based on the interaction result;
      and
   a display module configured to display, in the chat interface, the interaction image and a save control associated with the interaction image.

According to one or more embodiments of the present disclosure, the apparatus further includes:
a display module configured to display, in a media content editing interface, the interaction media content in response to a trigger operation of the first user on the view control.

According to one or more embodiments of the present disclosure, the media content editing interface further includes a post control;
the apparatus further includes:
a posting module configured to post the interaction media content in response to a trigger operation of the first user on the post control.

According to one or more embodiments of the present disclosure, the apparatus further includes:
a storage module configured to save the interaction image in response to a trigger operation of the first user on the save control.

According to one or more embodiments of the present disclosure, an interaction apparatus based on a virtual object, applied to a client of a second user, is provided. The apparatus includes:
a determining module configured to determine a second virtual object associated with the second user, wherein the second virtual object is a virtual object pre-generated by the second user;
a generation module configured to generate an associated content of the second virtual object in response to a preset operation triggered on the second virtual object by the second user; and
a sending module configured to send the associated content to a chat interface between the second user and a first user, so that the first user performs a preset operation based on the associated content to determine an interactive content, performs an interaction operation with the second virtual object based on the interactive content to generate an interaction result, and displays the interaction result in the chat interface, wherein the first user is a user having a preset association relationship with the second user.

According to one or more embodiments of the present disclosure, the generation module is configured to:
display, in the chat interface, an expression list corresponding to the second virtual object, wherein the expression list includes at least one expression content to be selected corresponding to the second virtual object; and
determine, in response to a selection operation of the second user in the expression list, an expression content to be selected that is selected by the second user as the associated content.

According to one or more embodiments of the present disclosure, the generation module is configured to:
redirect to a group photo interaction interface associated with the first user in response to a preset trigger operation of the second user for the first user; and
generate, in the group photo interaction interface, the associated content of the second virtual object.

According to one or more embodiments of the present disclosure, the group photo interaction interface includes at least one interaction category;
the generation module is configured to:
display, in response to a selection operation of the first user on the at least one interaction category, at least one preset interaction action associated with a target interaction category selected by the first user;
determine a display position relationship between the second virtual object and a first virtual object corresponding to the first user in any of the at least one preset interaction action in response to a selection operation of the first user on the preset interaction action;
perform a mixing operation on the first virtual object and the second virtual object based on the display position relationship to obtain a combined virtual object; and
trigger the combined virtual object to perform the preset interaction action to obtain the associated content of the second virtual object.

According to one or more embodiments of the present disclosure, an electronic device is provided. The electronic device includes: at least one processor and a memory;
the memory stores computer-executable instructions; and
the at least one processor executes the computer-executable instructions stored in the memory that cause the at least one processor to perform the interaction method based on a virtual object according to the above embodiments and various possible designs of the above embodiments.

According to one or more embodiments of the present disclosure, a computer-readable storage medium is provided. The computer-readable storage medium stores computer-executable instructions, when executed by a processor, implement the interaction method based on a virtual object according to the above embodiments and various possible designs of the above embodiments.

According to one or more embodiments of the present disclosure, a computer program product is provided. The computer program product includes a computer program that, when executed by a processor, implements the interaction method based on a virtual object according to the above embodiments and various possible designs of the above embodiments.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. **In** contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interaction method based on a virtual object, applied to a client of a first user, comprising:
displaying, in a chat interface between the first user and a second user, an associated content of a second virtual object which is sent by the second user, wherein the second user is a user having a preset association relationship with the first user, and the second virtual object is a virtual object pre-generated by the second user;
determining, in response to a preset operation triggered by the first user based on the associated content, an interactive content corresponding to the preset operation;
performing an interaction operation with the second virtual object based on the interactive content, to obtain an interaction result; and
displaying the interaction result in the chat interface between the first user and the second user.

2. The method according to claim 1, wherein displaying, in the chat interface between the first user and the second user, the associated content of the second virtual object which is sent by the second user comprises:
displaying, in the chat interface, any expression content associated with the second virtual object which is sent by the second user.

3. The method according to claim 1 or 2, wherein determining, in response to the preset operation triggered by the first user based on the associated content, an interactive content corresponding to the preset operation comprises:
displaying, in a preset display area, a function list corresponding to the associated content in response to a preset trigger operation of the first user on the associated content, wherein the function list comprises at least one content to be mixed; and
determining, in response to a trigger operation of the first user on any of the at least one content to be mixed, a target content to be mixed that is selected by the first user as the interactive content.

4. The method according to claim 3, wherein the content to be mixed comprises one or more of a group consisting of an emoji, an image content, and a text content.

5. The method according to claim 3 or 4, wherein the function list further comprises a preset display control; and
after displaying, in the preset display area, the function list corresponding to the associated content, the method further comprises:
displaying, in the function list, all preset contents to be mixed in response to a trigger operation of the first user on the display control.

6. The method according to any one of claims 3 to 5, wherein performing the interaction operation with the second virtual object based on the interactive content to obtain the interaction result comprises:
performing a mixing operation on the interactive content and the associated content of the second virtual object to obtain the interaction result.

7. The method according to claim 6, wherein performing the mixing operation on the interactive content and the associated content of the second virtual object to obtain the interaction result comprises:
determining mixing information corresponding to the interactive content, wherein the mixing information comprises one or more of a group consisting of a mixing range, a mixing position, and a mixing effect corresponding to the interactive content; and
performing, based on the mixing information, the mixing operation on the interactive content and the associated content of the second virtual object to obtain the interaction result.

8. The method according to claim 6 or 7, wherein displaying the interaction result in the chat interface between the first user and the second user comprises:
switching the associated content of the second virtual object currently displayed in the chat interface to the interactive content, wherein the interactive content comprises an associated feature in the associated content and an associated feature in the target content to be mixed.

9. The method according to any one of claims 3 to 8, wherein after displaying the interaction result in the chat interface between the first user and the second user, the method further comprises:
displaying, in the preset display area, a function list corresponding to the interaction result in response to a trigger operation of the first user on the interaction result, wherein the function list comprises a favorite control; and
favoriting the interaction result as a new expression content in response to a trigger operation of the first user on the favorite control.

10. The method according to any one of claims 1 to 9, wherein displaying, in the chat interface between the first user and the second user, the associated content of the second virtual object which is sent by the second user comprises:
displaying, in the chat interface, at least one selected from the group consisting of the second virtual object and a group photo content of the second virtual object and a first virtual object corresponding to the first user which is sent by the second user, wherein the first virtual object and the second virtual object in the group photo content respectively perform interaction actions predetermined by the second user.

11. The method according to claim 10, wherein the display area corresponding to the associated content further comprises a preset interaction control; and
determining, in response to the preset operation triggered by the first user based on the associated content, the interactive content corresponding to the preset operation comprises:
displaying a preset interaction interface in response to a trigger operation of the first user on the interaction control, wherein the interaction interface comprises the first virtual object and at least one interaction category;
displaying at least one preset interaction action associated with any interaction category in response to a trigger operation of the first user on the interaction category; and
determining a target preset interaction action selected by the first user and the first virtual object as the interactive content in response to a trigger operation of the first user on any one of the at least one preset interaction action.

12. The method according to claim 11, wherein determining the target preset interaction action selected by the first user and the first virtual object as the interactive content comprises:
determining a display position relationship between the first virtual object and the second virtual object in the target preset interaction action;
performing a mixing operation on the first virtual object and the second virtual object based on the display position relationship to obtain a mixed combined virtual object; and
triggering the mixed combined virtual object to perform the target preset interaction action to obtain the interactive content,
wherein the first virtual object and the second virtual object respectively perform different actions when the combined virtual object performs the target preset interaction action;
alternatively, determining the target preset interaction action selected by the first user and the first virtual object as the interactive content comprises:
triggering the first virtual object to perform the target preset interaction operation to obtain the interactive content.

13. The method according to any one of claims 10 to 12, wherein after performing the interaction operation with the second virtual object based on the interactive content to obtain the interaction result, the method further comprises:
storing the interaction result as a new expression content associated with the second virtual object.

14. The method according to any one of claims 10 to 13, further comprising:
generating an interaction media content based on the interaction result; and
displaying, in the chat interface, a view control associated with the interaction media content;
and/or
the method further comprises:
generating an interaction image based on the interaction result; and
displaying, in the chat interface, the interaction image and a save control associated with the interaction image.

15. The method according to claim 14, wherein after displaying, in the chat interface, the view control associated with the interaction media content, the method further comprises:
displaying, in a media content editing interface, the interaction media content in response to a trigger operation of the first user on the view control.

16. The method according to claim 15, wherein the media content editing interface further comprises a post control; and
after displaying, in the media content editing interface, the interaction media content in response to the trigger operation of the first user on the view control, the method further comprises:
posting the interaction media content in response to a trigger operation of the first user on the post control.

17. The method according to any one of claims 14 to 16, wherein after displaying, in the chat interface, the interaction image and the save control associated with the interaction image, the method further comprises:
saving the interaction image in response to a trigger operation of the first user on the save control.

18. A an interaction method based on a virtual object, applied to a client of a second user, comprising:
determining a second virtual object associated with the second user, wherein the second virtual object is a virtual object pre-generated by the second user;
generating an associated content of the second virtual object in response to a preset operation triggered on the second virtual object by the second user; and
sending the associated content to a chat interface between the second user and a first user, so that the first user performs a preset operation based on the associated content to determine an interactive content, performs an interaction operation with the second virtual object based on the interactive content to generate an interaction result, and displays the interaction result in the chat interface, wherein the first user is a user having a preset association relationship with the second user.

19. The method according to claim 18, wherein generating the associated content of the second virtual object in response to the preset operation triggered on the second virtual object by the second user comprises:
displaying, in the chat interface, an expression list corresponding to the second virtual object, wherein the expression list comprises at least one expression content to be selected corresponding to the second virtual object; and
determining, in response to a selection operation of the second user in the expression list, an expression content to be selected that is selected by the second user as the associated content.

20. The method according to claim 18, wherein generating the associated content of the second virtual object in response to the preset operation triggered on the second virtual object by the second user comprises:
redirecting to a group photo interaction interface associated with the first user in response to a preset trigger operation of the second user for the first user; and
generating, in the group photo interaction interface, the associated content of the second virtual object.

21. The method according to claim 20, wherein the group photo interaction interface comprises at least one interaction category; and
generating, in the group photo interaction interface, the associated content of the second virtual object comprises:
displaying, in response to a selection operation of the first user on the at least one interaction category, at least one preset interaction action associated with a target interaction category selected by the first user;
determining a display position relationship between the second virtual object and a first virtual object corresponding to the first user in any of the at least one preset interaction action in response to a selection operation of the first user on the preset interaction action;
performing a mixing operation on the first virtual object and the second virtual object based on the display position relationship to obtain a combined virtual object; and
triggering the combined virtual object to perform the preset interaction action to obtain the associated content of the second virtual object.

22. An interaction apparatus based on a virtual object, applied to a client of a first user, comprising:
a display module configured to display, in a chat interface between the first user and a second user, an associated content of a second virtual object which is sent by the second user, wherein the second user is a user having a preset association relationship with the first user, and the second virtual object is a virtual object pre-generated by the second user;
a processing module configured to determine, in response to a preset operation triggered by the first user based on the associated content, an interactive content corresponding to the preset operation;
an interaction module configured to perform an interaction operation with the second virtual object based on the interactive content to obtain an interaction result; and
a display module configured to display the interaction result in the chat interface between the first user and the second user.

23. An interaction apparatus based on a virtual object, applied to a client of a second user, comprising:
a determining module configured to determine a second virtual object associated with the second user, wherein the second virtual object is a virtual object pre-generated by the second user;
a generation module configured to generate associated content of the second virtual object in response to a preset operation triggered on the second virtual object by the second user; and
a sending module configured to send the associated content to a chat interface between the second user and a first user, so that the first user performs a preset operation based on the associated content to determine an interactive content, performs an interaction operation with the second virtual object based on the interactive content to generate an interaction result, and displays the interaction result in the chat interface, wherein the first user is a user having a preset association relationship with the second user.

24. An electronic device, comprising: a processor and a memory, wherein
the memory stores computer-executable instructions; and
the processor executes the computer-executable instructions stored in the memory, to cause the processor to perform the interaction method based on a virtual object according to any one of claims 1 to 17 or 18 to 21.

25. A computer-readable storage medium storing computer-executable instructions thereon, when executed by a processor, implement the interaction method based on a virtual object according to any one of claims 1 to 17 or 18 to 21.

26. A computer program product, comprising a computer program, when executed by a processor, implements the interaction method based on a virtual object according to any one of claims 1 to 17 or 18 to 21.
